# EUROPÄISCHE PATENTSCHRIFT

(11) **EP 2 236 324 B1**
(45) Veröffentlichungstag und Bekanntmachung des Hinweises auf die Patenterteilung: **11.06.2014**
(21) Anmeldenummer: 10158986.9
(22) Anmeldetag: 01.04.2010
(51) Int. Cl.: B60G 15/06, B60G 17/02, F16F 1/12

(54) **Höhenverstelleinrichtung für Radaufhängungen von Kraftfahrzeugen**
Height adjustment device for wheel suspensions in motor vehicles
Dispositif de réglage en hauteur pour suspensions de roues de véhicules automobiles

(30) Priorität: 03.04.2009 DE 102009016252
(43) Veröffentlichungstag der Anmeldung: 06.10.2010
(73) Patentinhaber: Schaeffler Technologies GmbH & Co. KG, 91074 Herzogenaurach (DE)
(72) Erfinder: Schmidt, Meinhard, 91126, Kammerstein (DE)

(56) Entgegenhaltungen:
- EP-A1- 2 060 417
- DE-A1- 19 543 760
- DE-A1-102006 056 762
- DE-A1-102007 011 615
- DE-B3-102005 060 504
- JP-A- 5 155 225

## Beschreibung

### Gebiet der Erfindung

Die vorliegende Erfindung betrifft eine Höhenverstelleinrichtung für Radaufhängungen von Kraftfahrzeugen. Derartige Höhenverstelleinrichtungen dienen dem Zweck, den Abstand des gefederten Fahrzeugaufbaus zur Fahrbahn zu verändern. Im normalen Fahrbetrieb kann beispielsweise eine Normal-Niveaustellung eingestellt sein, während z.B. bei unebenem Gelände eine Hochniveaustellung und auf glatter Fahrbahn bei hohen Fahrzeuggeschwindigkeiten eine Tiefniveaustellung eingestellt sein kann.

### Hintergrund der Erfindung

Aus DE 10 2006 056 762 A1 beispielsweise ist eine Höhenverstelleinrichtung bekannt geworden, die an einer Federbeinachse vorgesehen ist. Ein am Domlager wirksam angeordneter Aktuator weist einen Elektromotor und ein Stellgetriebe auf, das einen auf einer Innenhülse drehbar gelagerten, axial unverschiebbar gehaltenen Stellring aufweist, in den an seinem Außenumfang zumindest eine zur Umfangsrichtung schräge, nutförmige Stellkulisse eingearbeitet ist. Der obere Federteller der Schraubendruckfeder ist mit einem zylindrischen Führungsabschnitt versehen, der sowohl auf dem Stellring als auch auf der Innenhülse axial verschiebbar geführt ist und der in die Stellkulisse des Stellrings eingreift. Unter einer Betätigung des Aktuators verdreht der Stellring um eine Längsachse, wobei aufgrund der Kulissenführung der Federteller in Längsrichtung der Federbeinachse verschoben wird, so dass das Fahrzeugniveau geändert ist.

Aus DE102005060504B3 sowie aus JP5-155225A sind Höhenverstelleinrichtungen nach den Merkmalen des Oberbegriffs des Anspruchs 1 bekannt geworden.

Insgesamt drei jeweils um 120° zueinander versetzt angeordnete, übereinanderliegende nutförmige Stellkulissen sind in den Stellring eingearbeitet. Der Stellring ist an seinem dem Domlager zugewandten Ende an einer Domlagerplatte über ein Axialkugellager axial gelagert. Die Schnelligkeit, mit der eine Niveauverstellung erfolgen kann, ist abhängig von der Leistung des Aktuators, und auch von der Steigung der Stellkulisse. Eine größere Steigung ermöglicht eine schnellere Verstellung, eine geringere Steigung bedeutet eine langsamere Verstellung, wobei jedoch mit zunehmender Steigung die Stellkräfte zwischen der Stellkulisse und dem in diese Stellkulisse eingreifenden Mitnehmer zunehmen.

### Aufgabe der Erfindung

Aufgabe der vorliegenden Erfindung war es, eine Höhenverstelleinrichtung nach den Merkmalen des Oberbegriffs des Anspruchs 1 anzugeben, bei dem eine Niveauverstellung effektiver durchgeführt werden kann.

### Zusammenfassung der Erfindung

Erfindungsgemäß wurde diese Aufgabe durch den Gegenstand des Anspruchs 1 gelöst. Dadurch, dass der Aktuator ein Antriebsteil aufweist, dass in formschlüssigem Wirkeingriff steht sowohl mit einem dem Fahrzeugaufbau oder dem Radträgerelement zugeordneten ersten Stellteil als auch mit einem dem Tragfederlager zugeordneten zweiten Stellteil, und dadurch, dass eine Aktuatorbetätigung mittels des Wirkeingriffes eine relative Höhenverstellung zwischen dem Antriebsteil einerseits und jedem der beiden Stellteile andererseits gewährleistet, ist eine effektive Niveauverstellung gewährleistet. Eine Betätigung des Antriebsteiles bewirkt demzufolge eine Höhenverstellung sowohl des ersten Stellteiles, als auch des zweiten Stellteiles, wobei sich die beiden Stellwege zu einem gemeinsamen Stellweg für die gewünschte Höhenverstellung addieren. In günstiger Weise ist somit sichergestellt, dass bei einer Betätigung des Antriebsteiles eine Niveauverstellung ebenfalls im Vergleich zu dem genannten Stand der Technik deutlich schneller erfolgen kann, ohne dass die Belastung im Wirkeingriff in unerwünschter Weise zunehmen muß.

Tragfedern tragen das Gewicht des Fahrzeugaufbaus, sie sind einerseits am Fahrzeugaufbau und andererseits an Achskonstruktionen abgestützt. Bei so genannten Federbeinachsen beispielsweise werden Schraubendruckfedern als Tragfedern eingesetzt. Die vorliegende Erfindung ist insbesondere für McPherson Federbeine geeignet. McPherson Federbeine übernehmen auch die Radführung und übertragen demzufolge entsprechende Kräfte. Das Domlager ermöglicht eine Drehung des Dämpfers um die Längsachse.

Die Tragfedern sind mit ihren beiden Federenden an Tragfederlagern abgestützt, wobei das eine Tragfederlager dem Fahrzeugaufbau und das andere Tragfederlager dem Radträgerelement zugeordnet ist. Bei Schraubendruckfedern werden oftmals Federteller als Tragfederlager eingesetzt.

Radträgerelemente nehmen die Fahrzeugräder auf, wobei derartige Radträgerelemente oftmals Lenker aufweisen, die als Längslenker oder Querlenker ausgeführt sein können. Das besondere Kennzeichen der McPherson-Federbein-Achse ist die direkt mit dem Dämpfergehäuse verbundene Radlagerung, als Radträgerlement.

Die bei gattungsgemäßen und auch erfindungsgemäßen Höhenverstelleinrichtungen eingesetzten Aktuatoren weisen einen Motor auf, und gegebenenfalls ein Stellgetriebe, um eine gewünschte Höhenverstellung des Tragfederlagers durchzuführen.

Ein formschlüssiger Wirkeingriff im Sinne der Erfindung liegt beispielsweise vor, wenn ein Stirnrad mit einer Zahnstange oder auch mit zwei Zahnstangen kämmt, wobei beispielsweise die Zahnstangen an diametral gegenüberliegenden Seiten des Stirnrades angeordnet sein können, so dass bei einer Drehung des Stirnrades beide Zahnstangen entlang ihrer Längsachse verschoben werden. Ein formschlüssiger Wirkeingriff im Sinne der Erfindung liegt auch vor, wenn eine Schraubverbindung hergestellt ist, wobei Schraubengewinde miteinander in Eingriff stehen.

Für die Erfindung eignen sich auch in günstiger Weise Rollengewindetriebe mit Rollenrückführung und Planetengewindetriebe aufgrund einer reduzierten Reibung gegenüber direktem Schraubeingriff von Gewinden.

Bei Planetengewindetrieben werden Rollen als Planeten in einem als Spindelmutter ausgefhrten Planetenträger aufgenommen. Konische Lagerflächen am Planetenträger nehmen Axialkräfte der Rollen auf, die mit ihren kegeligen Enden an den konischen Lagerflächen anliegen, wobei die Rollen an ihrem zylindrischen Außenumfang bspw. mit einem Linksgewinde und die mit den Rollen in Eingriff stehende Spindel mit einem Rechtsgewinde versehen sein können.

Erfindungsgemäß weist der Aktuator das um eine Längsachse drehbar angeordnete Antriebsteil auf, wobei an diesem Antriebsteil ein erster Gewindeabschnitt und ein zweiter Gewindeabschnitts vorgesehen sind. Beide Gewindeabschnitte stehen in Schraubverbindung sowohl mit dem ersten Stellteil als auch mit dem zweiten Stellteil, wobei die beiden Gewindeabschnitte des Antriebsteiles mit gegenläufiger Gangrichtung versehen sind.

Unter einer Gangrichtung eines Gewindes versteht man die Drehrichtung, die zum Ineinanderdrehen der Gewinde führt. Rechtsgewinde laufen durch Drehung im Uhrzeigersinn ineinander, Linksgewinde hingegen auseinander.

Erfindungsgemäß erfolgt durch die Drehung des Antriebsteiles um die Längsachse eine Verschiebung der beiden Stellteile entlang der Längsachse, um die gewünschte Niveauverstellung durchzuführen. Die gegenläufige Gangrichtung bewirkt, dass sich die beiden Stellwege der Stellteile zu einem gemeinsamen Gesamtstellweg addieren.

Die weiter oben erwähnten Planetengewindetriebe können bei dieser erfindunggemäßen Höhenverstelleinrichtung in vorteilhafter Weise zum Einsatz kommen, wobei je ein Planetengewindetrieb zwischen jedem der beiden Stellteile und dem Antriebsteil angeordnet sein kann.

Wenn die erfindungsgemäße Höhenverstelleinrichtung bei einer Federbeinachse zum Einsatz kommen soll, kann das erste Stellteil als an dem Fahrzeugaufbau gehaltene Domlagerplatte zur Abstützung der Tragfeder ausgebildet sein, wobei zwischen der Domlagerplatte und dem Tragfederlager der Aktuator wirksam angeordnet ist. Das zweite Stellteil kann als Trägerplatte für das Tragfederlager ausgebildet sein, wobei zwischen der Trägerplatte und dem Tragfederlager ein Axiallager angeordnet sein kann. Dieses Axiallager ermöglicht eine freie Drehung der Schraubendruckfeder. Unter einem Zusammendrücken oder Entspannen der Schraubendruckfeder verdrehen deren Enden zueinander, wobei diese Verdrehung durch das Axiallager ungehindert ermöglicht wird.

Bei vielen Anwendungen kann es möglich sein, dass um eine Längsachse drehbare Antriebsteil zwischen dem ersten Stellteil und den zweiten Stellteil anzuordnen, wobei eine Verdrehsicherung zwischen dem ersten Stellteil und dem zweiten Stellteil vorgesehen ist. Eine Betätigung des Antriebsteiles bewirkt dessen Verdrehung um die Längsachse, wobei die Verdrehsicherung sicherstellt, dass die im Wirkeingriff mit dem Antriebsteil stehenden Stellteile lediglich entlang der Längsachse zueinander verschoben werden, jedoch nicht gemeinsam mit dem Antriebsteil.

Erfindungsgemäße Höhenverstelleinrichtungen weisen einen Aktuator auf, der insbesondere mit einem Elektromotor und einem daran angeschlossenen Stellgetriebe versehen ist, wobei das Stellgetriebe das Antriebsteil aufweist. Das Stellgetriebe kann beispielsweise ein Zahnradgetriebe, insbesondere Stirnradgetriebe aufweisen, wobei das Antriebsteil eine Stirnverzahnung aufweisen kann, um mit einem oder mehreren Ritzeln, Zahnrädern oder Stirnrädern des Stellgetriebes zu kämmen. Dieses Antriebsteil kann in günstiger Weise mit den bereits oben erwähnten Gewindeabschnitten gegenläufiger Gangrichtung versehen sein.

Eines der beiden Stellteile kann in günstiger Weise mit einem Halter zur Halterung des Motors und des Stellgetriebes versehen sein. In günstiger Weise kann der Halter und das Stellteil als einstückiges Bauteil ausgebildet sein.

Bei dem zuletzt erwähnten erfindungsgemäßen Ausführungsbeispiel kann das Antriebsteil einen inneren Ring mit den beiden Gewindeabschnitten aufweisen, sowie einen den inneren Ring umgebenden äußeren Ring, an dem die Stirnverzahnung ausgebildet ist. Dieses Antriebsteil baut in axialer Richtung in günstiger Weise sehr kurz, denn die Stirnverzahnung und die Gewindeabschnitte sind nicht axial hintereinander angeordnet, sondern die Stirnverzahnung kann neben den Gewindeabschnitten angeordnet sein.

Bei einer zweckmäßigen Weiterbildung begrenzen der innere Ring und der äußere Ring des Antriebsteiles einen Ringspalt, in den das erste Stellteil eingreift und mit seinem Gewindeabschnitt in Schraubverbindung mit dem ersten Gewindeabschnitt des Antriebsteiles steht. Bei dieser erfindungsgemäßen Weiterbildung kann eine sehr Bauraum sparende Höhenverstelleinrichtung bereitgestellt werden.

### Kurze Beschreibung der Zeichnungen

Nachstehend wird die Erfindung anhand eines in insgesamt 5 Figuren abgebildeten Ausführungsbeispieles näher erläutert. Es zeigen:
- Figur 1: eine erfindungsgemäße Höhenverstelleinrichtung in perspektivischer Darstellung,
- Figur 2: einen Längsschnitt durch die Höhenverstelleinrichtung aus Figur 1,
- Figur 3: einen Längsschnitt wie in Figur 2, jedoch nach einer Niveauverstellung,
- Figur 4: eine Ausschnittsvergrößerung der Figur 3 und
- Figur 5: eine Ansicht der erfindungsgemäßen Höhenverstelleinrichtung.

### Detaillierte Beschreibung der Zeichnungen

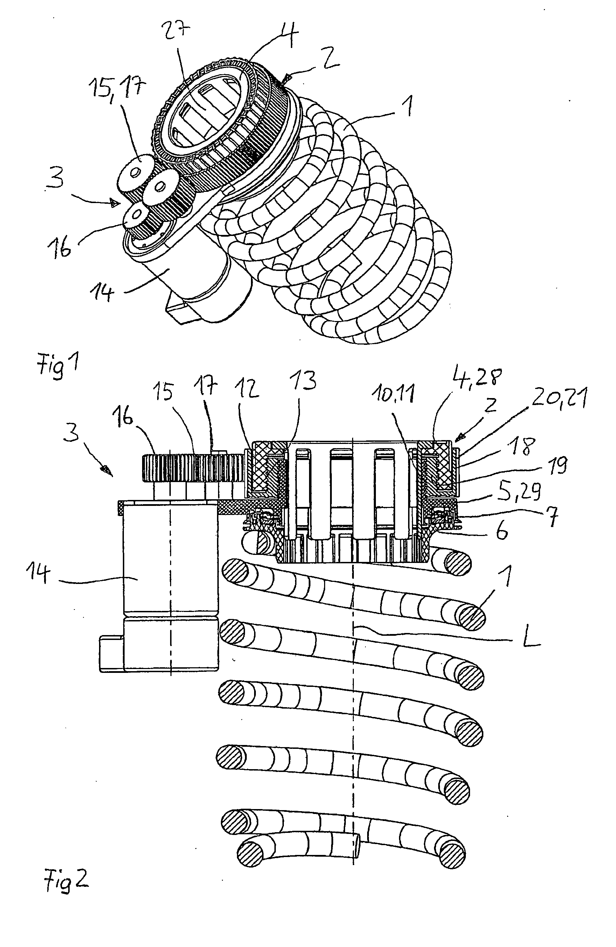

Figur 1 zeigt eine erfindungsgemäße Höhenverstellung für Radaufhängungen von Kraftfahrzeugen in perspektivischer Darstellung. Diese Höhenverstellung ist für eine Federbeinachse vorgesehen. Eine als Tragfederlager vorgesehene Schraubendruckfeder 1 ist mit ihrem unteren Ende an einem hier nicht abgebildeten Radträger abgestützt. Die Schraubendruckfeder 1 ist mit ihrem oberen Ende über ein Domlager 2 an einem hier nicht abgebildeten Fahrzeugaufbau abgestützt.

Ferner ist ein Aktuator 3 vorgesehen, über den ein Abstand zwischen dem oberen Ende der Schraubendruckfeder und dem Fahrzeugaufbau eingestellt werden kann.

Figur 2 zeigt die erfindungsgemäße Höhenverstelleinrichtung im Längsschnitt. Das Domlager 2 weist eine Domlagerplatte 4 und eine Trägerplatte 5 auf. Die Domlagerplatte 4 ist zur Halterung an dem nicht abgebildeten Fahrzeugaufbau vorgesehen. Zwischen der Trägerplatte 5 und einem für die Abstützung des oberen Endes der Schraubendruckfeder 1 vorgesehenen Federteller 6 ist ein Axiallager 7 angeordnet.

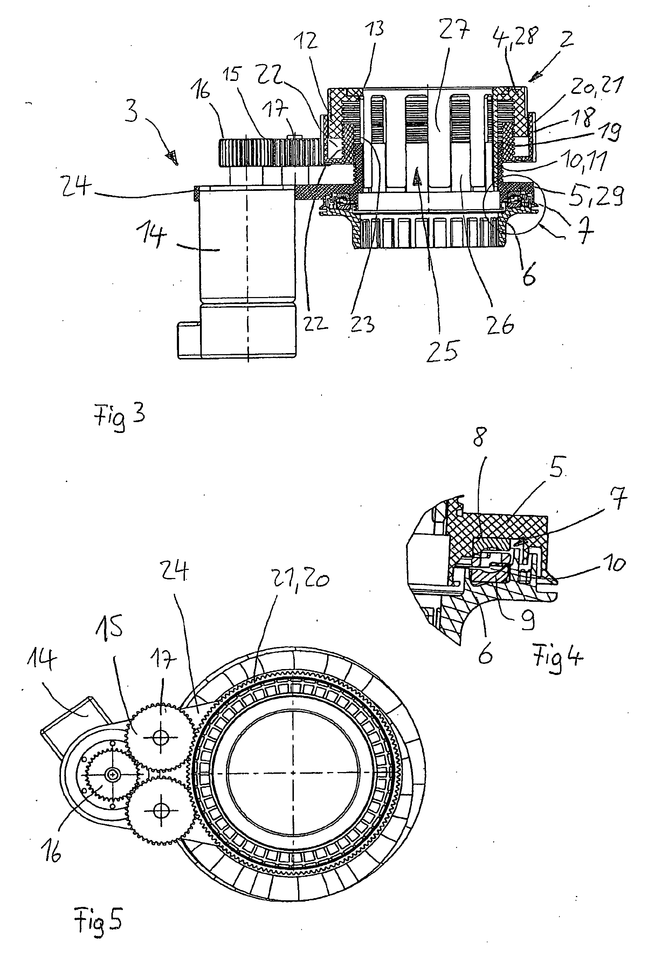

Figur 4 zeigt das Axiallager 7 in einer Ausschnittsvergrößerung. Ein Laufring 8 ist an der Trägerplatte 5 abgestützt, ein weiterer Laufring 9 ist an dem Federteller 6 abgestützt. Zwischen den beiden Laufringen 8 und 9 sind Kugeln 10 angeordnet, die an Laufbahnen der Laufringe 8,9 abwälzen. Dieses Axiallager 7 ermöglicht eine Verdrehung der beiden Federenden zueinander.

Figur 2 ist weiterhin zu entnehmen, dass die Trägerplatte 5 einen hülsenförmigen Abschnitt 10 aufweist, an dessen Außenumfang ein Gewindeabschnitt 11 1 ausgebildet ist. Das von der Trägerplatte 5 abgewandte Ende des hülsenförmigen Abschnittes 10 ist dem Fahrzeugaufbau zugewandt.

Figur 2 ist weiterhin zu entnehmen, dass die Domlagerplatte 4 einen umlaufenden Kragen 12 aufweist, wobei das von der Domlagerplatte 4 abgewandte Ende des Kragens 12 der Trägerplatte 5 zugewandt ist. Der umlaufend geschlossene Kragen 12 ist an seinem Innenumfang mit einem Gewindeabschnitt 13 versehen.

Die beiden Gewindeabschnitte 11,13 winden sich um eine Längsachse L der Federbeinachse.

Der Aktuator 3 weist einen Elektromotor 14 auf, an den ein Stellgetriebe 15 angeschlossen ist. Das Stellgetriebe 15 weist Stirnräder 16,17 auf, wobei das Stirnrad 16 auf der Motorwelle des Elektromotors 15 befestigt ist, und wobei jedes der beiden Stirnräder 10 mit dem Stirnrad 16 kämmen.

Ferner ist ein Antriebsteil 18 vorgesehen, dass um die Längsachse L drehbar angeordnet ist. Dieses Antriebsteil 18 weist einen inneren Ring 19 auf, und einen äußeren Ring 20. Beide Ringe 19,20 sind koaxial zu der Längsachse L angeordnet. Der äußere Ring 20 ist an seinem Außenumfang mit einer Verzahnung 21 versehen. Die beiden Ritzel 15,17 kämmen mit dieser Verzahnung 21 des äußeren Ringes 20.

Die beiden Ringe 19,20 begrenzen einen Ringspalt 20a, der deutlich in der Figur 3 zu erkennen ist. Die Domlagerplatte 4 greift mit ihrem Kragen 12 in diesen Ringspalt 20a ein.

Der innere Ring 19 des Antriebsteiles 18 ist an seinem Außenumfang mit einem ersten Gewindeabschnitt 22, und an seinem Innenumfang mit einem zweiten Gewindeabschnitt 23 versehen. Der erste Gewindeabschnitt 22 steht in Schraubverbindung mit dem Gewindeabschnitt 13 des Kragens 12. Die beiden Gewindeabschnitte 22 und 13 sind als Linksgewinde ausgebildet. Der zweite Gewindeabschnitt 23 steht in Schraubverbindung mit dem Gewindeabschnitt 11 1 des hülsenförmigen Abschnittes 10 der Trägerplatte 5. die Gewindeabschnitte 23 und 11 sind als Rechtsgewinde ausgebildet.

Die Trägerplatte 5 ist mit einem Halter 24 zur Halterung des Elektromotors 15 sowie des Stellgetriebes 15 versehen, wie beispielsweise den Figuren 3 und 5 zu entnehmen ist. Dieser Halter 24 ist einstückig an die Trägerplatte 5 angeformt.

Die Domlagerplatte 4 und die Trägerplatte 5 sind zueinander mittels einer Verdrehsicherung 25 verdrehgesichert. Diese Verdrehsicherung 25 umfasst ineinander greifende Klauen 26 der Trägerplatte 5 und Klauen 27 der Domlagerplatte 4. Die Klauen 26,27 erstrecken sich entlang der Längsachse L.

Nachstehend wird die Wirkungsweise der erfindungsgemäßen Höhenverstelleinrichtung näher erläutert. Zu diesem Zweck wird nachstehend Bezug genommen auf die Figuren 2 und 3. Während Figur 2 die erfindungsgemäße Höhenverstelleinrichtung in einer Tiefniveaustellung zeigt, ist in der Figur 3 eine Hochniveaustellung angefahren.

Ausgehend von der Figur 2 wird der Aktuator 3 betätigt. Das Antriebsteil 18 rotiert um die Längsachse L. Aufgrund der Schraubverbindung des Antriebsteiles 18 mit der Domlagerplatte 4 und der Trägerplatte 5 werden unter einer Rotation des Antriebsteiles 18 die Domlagerplatte 4 und die Trägerplatte 5 voneinander weg entlang der Längsachse L verlagert, wobei sowohl die Domlagerplatte 4 als auch die Trägerplatte 5 relativ zu dem Antriebsteil 18 entlang der Längsachse L verschoben werden. Aufgrund der gegenläufigen Gangrichtung der Schraubverbindungen wird bei einer Drehung des Antriebsteiles 18 beispielsweise im Uhrzeigersinn die Domlagerplatte 4 in Richtung auf den nicht abgebildeten Fahrzeugaufbau und die Trägerplatte 5 in Richtung auf die Schraubendruckfeder 1 verlagert. Die Verlagerungen entlang der Längsachse addieren sich zu einem gemeinsamen Stellweg, der eine Höhenverstellung des Fahrzeugaufbaus entspricht.

Figur 3 zeigt schließlich die Situation nach vollendeter Verstellung. Hier ist deutlich zu erkennen, dass die Domlagerplatte 4 und die Trägerplatte 5 axial zueinander verschoben sind.

Figur 5 zeigt deutlich die Anordnung der Stirnräder 16,17: beide Stirnräder 17 kämmen mit dem Stirnrad 16.und mit der Außenverzahnung 21 des äußeren Ringes 20 des Antriebsteiles 18.

Die Domlagerplatte 4 bildet als Teil des Stellgetriebes 15 ein erstes Stellteil 28, und die Trägerplatte 5 bildet als Teil des Stellgetriebes 15 ein zweites Stellteil 29.

Das hier beschriebene Domlager 2 kann vollständig aus Kunststoff in günstiger Weise im Spritzverfahren hergestellt werden. Günstig ist eine Werkstoffpaarung zwischen dem Antriebsteil und jedem der beiden Stellteile. Vorzugsweise sind das Antriebsteil aus Stahl und die beiden Stellteile aus Kunststoff gebildet.

In vorteilhafter Weise ermöglicht die Erfindung eine problemlose Abdichtung kritischer Bereiche: beispielsweise kann eine Abdichtung zwischen dem Federteller 6 und der Trägerplatte 5 mittels einer Labyrinthdichtung erfolgen, die am Außenumfang des Federtellers 6 angeordnet sein kann. Ebenso kann eine am unteren axialen Ende des Antriebsteiles 18 vorgesehene Labyrinthdichtung am Außenumfang des hülsenförmigen Abschnittes der Trägerplatte 5 angeordnet sein.

Die hier beschriebenen Gewindeabschnitte können auch als Trapezgewinde mit selbsthemmung ausgeführt sein, so dass auf eine zusätzliche Sperreinrichtung verzichtet werden kann. Die oben beschriebene Verdrehsicherung kann zugleich als Abdichtung verwendet werden, was dadurch möglich ist, dass die Klauen mit sehr geringem Abstand ineinander greifen.

### Bezugszahlen

- 1: Schraubendruckfeder
- 2: Domlager
- 3: Aktuator
- 4: Domlagerplatte
- 5: Trägerplatte
- 6: Federteller
- 7: Axiallager
- 8: Laufring
- 9: Laufring
- 10: hülsenförmiger Abschnitt
- 11: Gewindeabschnitt
- 12: Kragen
- 13: Gewindeabschnitt
- 14: E-Motor
- 15: Stellgetriebe
- 16: Stirnrad
- 17: Stirnrad
- 18: Antriebsteil
- 19: innerer Ring
- 20: äußerer Ring
- 20a: Ringspalt
- 21: Verzahnung
- 22: erster Gewindeabschnitt
- 23: zweiter Gewindeabschnitt
- 24: Halter
- 25: Verdrehsicherung
- 26: Klaue
- 27: Klaue
- 28: erstes Stellteil
- 29: zweites Stellteil

## Patentansprüche

1. Höhenverstelleinrichtung für Radaufhängungen von Kraftfahrzeugen, mit einem insbesondere durch einen Federteller (6) gebildeten Tragfederlager für eine zwischen einem Fahrzeugaufbau und einem Radträgerelement wirksam angeordneten Tragfeder, wobei das Tragfederlager mittels eines Aktuators (3) höhenverstellbar angeordnet ist, wobei der Aktuator (3) ein Antriebsteil (18) aufweist, das in formschlüssigem Wirkeingriff steht sowohl mit einem dem Fahrzeugaufbau oder dem Radträgerelement zugeordneten ersten Stellteil (28) als auch mit einem dem Tragfederlager zugeordneten zweiten Stellteil (29), **dadurch gekennzeichnet, dass** für eine relative Höhenverstellung zwischen dem Antriebsteil (18) einerseits und jedem der beiden Stellteile (28, 29) anderseits der Aktuator (3) das um eine Längachse (L) drehbar angeordnete, mit einem ersten Gewindeabschnitt (22) und mit einem zweiten Gewindeabschnitt (23) versehene Antriebsteil (18) aufweist, das in Schraubverbindung sowohl mit dem ersten Stellteil (28) als auch mit dem zweiten Stellteil (29) steht, wobei die beiden Gewindeabschnitte (22, 23) des Antriebsteiles (18) mit gegenläufiger Gangrichtung versehen sind.

2. Höhenverstelleinrichtung nach Anspruch 1, bei der das erste Stellteil (28) und das zweite Stellteil (29) jeweils mit einem um eine Längsachse gewundenen Gewindeabschnitt (11, 13) gegenläufiger Gangrichtung versehen sind, wobei beide Stellteile (28, 29) in Schraubverbindung mit dem Antriebsteil (18) stehen.

3. Höhenverstelleinrichtung nach Anspruch 1, bei der das erste Stellteil (28) als an dem Fahrzeugaufbau gehaltene Domlagerplatte (4) zur Abstützung der Tragfeder ausgebildet ist, wobei zwischen der Domlagerplatte (4) und dem Tragfederlager der Aktuator (3) wirksam angeordnet ist.

4. Höhenverstelleinrichtung nach Anspruch 1, bei der das zweite Stellteil (29) als Trägerplatte (5) für das Tragfederlager ausgebildet ist, wobei zwischen der Trägerplatte (5) und dem Tragfederlager ein Axiallager (7) angeordnet ist.

5. Höhenverstelleinrichtung nach Anspruch 1, bei der zwischen dem ersten Stellteil (28) und dem zweiten Stellteil (29) das um eine Längsachse (L) drehbare Antriebsteil (18) angeordnet ist, wobei eine Verdrehsicherung (25) zwischen dem ersten Stellteil (28) und dem zweiten Stellteil (29) vorgesehen ist.

6. Höhenverstelleinrichtung nach Anspruch 1, bei der der Aktuator (3) mit einem Motor, insbesondere Elektromotor (14), sowie mit einem das Antriebsteil (18) aufweisenden Stellgetriebe (15) versehen ist.

7. Höhenverstelleinrichtung nach Anspruch 6, bei der eines der beiden Stellteile (28, 29) mit einem Halter (24) zur Halterung des Motors und des Stellgetriebes (15) versehen ist.

8. Höhenverstelleinrichtung nach Anspruch 6, bei der ein Ritzel des Stellgetriebes (15) mit einer an dem Antriebsteil (18) vorgesehenen Verzahnung kämmt, wobei das Antriebsteil (18) an einem Umfangsabschnitt mit dem ersten Gewindeabschnitt (22) und an einem weiteren Umfangsabschnitt mit dem zweiten Gewindeabschnitt (23) versehen ist.

9. Höhenverstelleinrichtung nach Anspruch 8, bei der das Antriebsteil (18) einen inneren Ring (19) mit den beiden Gewindeabschnitten (22, 23), sowie einen den inneren Ring (19) umgebenden äußeren Ring (29) aufweist, an dem die Verzahnung ausgebildet ist.

10. Höhenverstelleinrichtung nach Anspruch 9, bei der das erste Stellteil (28) in einen von dem inneren Ring (19) und dem äußeren Ring (29) gebildeten Ringspalt (20a) eingreift und mit seinem Gewindeabschnitt (13) in Schraubverbindung mit dem ersten Gewindeabschnitt (22) des Antriebsteiles (18) steht.

## Claims

1. Height adjustment device for wheel suspensions in motor vehicles, with a suspension spring bearing, formed particularly by a spring plate (6), for a suspension spring actively arranged between a vehicle body and a wheel carrier element, the suspension spring bearing being arranged adjustably in height by means of an actuator (3), the actuator (3) having a drive part (18) which is in positive active engagement both with a first actuating part (28) assigned to the vehicle body or to the wheel carrier element and with a second actuating part (29) assigned to the suspension spring bearing, **characterized in that**, for a relative height adjustment between the drive part (18), on the one hand, and each of the two actuating parts (28, 29), on the other hand, the actuator (3) has the drive part (18) which is arranged rotatably about a longitudinal axis (L) and is provided with a first threaded portion (22) and with a second threaded portion (23) and which is in screwing connection both with the first actuating part (28) and with the second actuating part (29), the two threaded portions (22, 23) of the drive part (18) being provided with an opposing pitch direction.

2. Height adjustment device according to Claim 1, in which the first actuating part (28) and the second actuating part (29) are provided in each case with a threaded portion (11, 13) wound about a longitudinal axis and having an opposing pitch direction, the two actuating parts (28, 29) being in screwing connection with the drive part (18).

3. Height adjustment device according to Claim 1, in which the first actuating part (28) is designed as a dome bearing plate (4), held on the vehicle body, for supporting the suspension spring, the actuator (3) being arranged actively between the dome bearing plate (4) and the suspension spring bearing.

4. Height adjustment device according to Claim 1, in which the second actuating part (29) is designed as a carrier plate (5) for the suspension spring bearing, an axial bearing (7) being arranged between the carrier plate (5) and the suspension spring bearing.

5. Height adjustment device according to Claim 1, in which the drive part (18) rotatable about a longitudinal axis (L) is arranged between the first actuating part (28) and the second actuating part (29), an anti-twist means (25) being provided between the first actuating part (28) and the second actuating part (29).

6. Height adjustment device according to Claim 1, in which the actuator (3) is provided with a motor, in particular an electric motor (14), and also with an actuating gear (15) having the drive part (18).

7. Height adjustment device according to Claim 6, in which one of the two actuating parts (28, 29) is provided with a holder (24) for holding the motor and the actuating gear (15).

8. Height adjustment device according to Claim 6, in which a pinion of the actuating gear (15) meshes with a toothing provided on the drive part (18), the drive part (18) being provided with the first threaded portion (22) on one circumferential portion and with the second threaded portion (23) on a further circumferential portion.

9. Height adjustment device according to Claim 8, in which the drive part (18) has an inner ring (19) with the two threaded portions (22, 23) and an outer ring (29) which surrounds the inner ring (19) and on which the toothing is formed.

10. Height adjustment device according to Claim 9, in which the first actuating part (28) engages into an annular gap (20a) formed by the inner ring (19) and the outer ring (29) and by means of its threaded portion (13) is in screwing connection with the first threaded portion (22) of the drive part (18).

## Revendications

1. Dispositif de réglage en hauteur pour suspensions de roues de véhicules automobiles, comprenant un palier à ressort de support formé en particulier par une coupelle de ressort (6) pour un ressort de support disposé fonctionnellement entre une carrosserie du véhicule et un élément de support de roues, le palier à ressort de support étant disposé de manière réglable en hauteur au moyen d'un actionneur (3), l'actionneur (3) présentant une partie d'entraînement (18) qui est en prise fonctionnelle par engagement par correspondance de forme à la fois avec une première partie de réglage (28) associée à la carrosserie du véhicule ou à l'élément de support de roues et avec une deuxième partie de réglage (29) associée au palier à ressort de support, **caractérisé en ce que**, pour un réglage en hauteur relatif entre la partie d'entraînement (18) d'une part et chacune des deux parties de réglage (28, 29) d'autre part, l'actionneur (3) présente la partie d'entraînement (18) disposée de manière rotative autour d'un axe longitudinal (L), pourvue d'une première portion filetée (22) et d'une deuxième portion filetée (23), laquelle partie d'entraînement est en liaison vissée à la fois avec la première partie de réglage (28) et avec la deuxième partie de réglage (29), les deux portions filetées (22, 23) de la partie d'entraînement (18) étant pourvues de sens de pas opposés.

2. Dispositif de réglage en hauteur selon la revendication 1, dans lequel la première partie de réglage (28) et la deuxième partie de réglage (29) sont chacune pourvues d'une portion filetée (11, 13) enroulée autour d'un axe longitudinal de sens de pas opposés, les deux parties de réglage (28, 29) étant en liaison vissée avec la partie d'entraînement (18).

3. Dispositif de réglage en hauteur selon la revendication 1, dans lequel la première partie de réglage (28) est réalisée en tant que plaque de palier de tourillon (4) retenue sur la carrosserie du véhicule pour supporter le ressort de support, l'actionneur (3) étant disposé fonctionnellement entre la plaque de palier de tourillon (4) et le palier à ressort de support.

4. Dispositif de réglage en hauteur selon la revendication 1, dans lequel la deuxième partie de réglage (29) est réalisée sous forme de plaque de support (5) pour le palier à ressort de support, un palier axial (7) étant disposé entre la plaque de support (5) et le palier à ressort de support.

5. Dispositif de réglage en hauteur selon la revendication 1, dans lequel la partie d'entraînement (18) pouvant tourner autour d'un axe longitudinal (L) est disposée entre la première partie de réglage (28) et la deuxième partie de réglage (29), un système antirotation (25) étant prévu entre la première partie de réglage (28) et la deuxième partie de réglage (29).

6. Dispositif de réglage en hauteur selon la revendication 1, dans lequel l'actionneur (3) est pourvu d'un moteur, en particulier d'un moteur électrique (14) ainsi que d'un engrenage d'actionneur (15) présentant la partie d'entraînement (18).

7. Dispositif de réglage en hauteur selon la revendication 6, dans lequel l'une des deux parties de réglage (28, 29) est pourvue d'un dispositif de retenue (24) pour retenir le moteur et l'engrenage d'actionneur (15).

8. Dispositif de réglage en hauteur selon la revendication 6, dans lequel un pignon de l'engrenage d'actionneur (15) s'engrène avec une denture prévue sur la partie d'entraînement (18), la partie d'entraînement (18) étant pourvue au niveau d'une portion périphérique de la première portion filetée (22) et au niveau d'une autre portion périphérique de la deuxième portion filetée (23).

9. Dispositif de réglage en hauteur selon la revendication 8, dans lequel la partie d'entraînement (18) présente une bague interne (19) avec les deux portions filetées (22, 23), ainsi qu'une bague externe (29) entourant la bague interne (19), sur laquelle est réalisée la denture.

10. Dispositif de réglage en hauteur selon la revendication 9, dans lequel la première partie de réglage (28) s'engage dans une fente annulaire (20a) formée par la bague interne (19) et la bague externe (29), et est en liaison vissée, par sa portion filetée (13), avec la première portion filetée (22) de la partie d'entraînement (18).
